# FASCICULE DE BREVET EUROPEEN

(11) **EP 2 188 157 B1**
(45) Date de publication et mention de la délivrance du brevet: **09.03.2011**
(21) Numéro de dépôt: 08835211.7
(22) Date de dépôt: 09.09.2008
(51) Int. Cl.: B60R 21/02, B60R 19/00

(54) **IMPACTEUR DE CHOC POUR GROUPE MOTOPROPULSEUR AUTOMOBILE**
STOSSAUFNAHMEMODUL FÜR EINEN AUTOMOBIL-ANTRIEBSZUG
SHOCK IMPACTOR FOR AN AUTOMOBILE POWERTRAIN

(30) Priorité: 19.09.2007 FR 0757677
(43) Date de publication de la demande: 26.05.2010
(73) Titulaire: Peugeot Citroën Automobiles SA, 78140 Vélizy-Villacoublay (FR)
(72) Inventeur: REMOND, Hervé, F-89140 Plessis St Jean (FR); CAMIZULI, Alain, F-92700 Colombes (FR)
(86) Numéro de dépôt international: PCT/FR2008/051608
(87) Numéro de publication internationale: WO 2009/044072

(56) Documents cités:
- DE-A1- 4 313 785
- DE-A1- 10 007 789

## Description

La présente invention concerne une butée de choc ou impacteur, pour groupe motopropulseur de véhicule automobile.

Pour améliorer la sécurité, les véhicules automobiles subissent des essais de chocs dans des conditions spécifiques qui représentent différents types d'accidents pouvant se produire, pour notamment chercher à protéger les passagers des blessures.

Ces essais comprennent en particulier des chocs sous différents angles sur la partie avant du véhicule, ce qui représente les accidents les plus fréquents, ces chocs se répercutant sur le groupe motopropulseur dans le cas où celui-ci se trouve dans le compartiment avant du véhicule. L'habitacle étant situé juste derrière le groupe motopropulseur, il est important pour ce type de véhicule de vérifier le cheminement du groupe motopropulseur représentant un ensemble lourd et rigide qui peut reculer lors du choc.

On s'efforce pour cela de prévoir les différentes déformations des composants du véhicule, pour que le groupe motopropulseur lors d'un choc avant soit guidé pendant son recul de manière à passer sous l'habitacle, et éviter une intrusion dans cet habitacle qui le déformerait fortement.

Un aspect important pour maîtriser les déformations, et de s'assurer que les parties avant de la carrosserie qui entourent le groupe motopropulseur, notamment la traverse avant qui fait souvent partie d'un berceau lié aux roues avant, prennent appui lors du choc d'une manière bien déterminée sur les parties en regard du groupe motopropulseur, et conserve ce contact pour lui transmette une force suivant une direction précise.

C'est pourquoi il est connu de créer sur le moteur ou la transmission qui lui est accolée, des faces d'impact rigides disposées suivant un certain angle, qui présentent une surface destinée à recevoir un effort important lors de la déformation des pièces environnantes. DE 43 13 785 divulgue un impacteur de choc avec toutes les caractéristiques du préambule de la revendication 1.

Un problème principal pour ce dispositif est de concevoir un composant comportant la face d'impact, qui soit fortement lié suivant les trois directions de l'espace au groupe motopropulseur, pour résister aux chocs tout en assurant une facilité de fabrication et d'assemblage pour réduire les coûts de fabrication.

La présente invention a notamment pour but d'apporter à la réalisation d'un impacteur de choc une solution simple, efficace et économique.

Elle propose à cet effet un impacteur de choc fixé au groupe motopropulseur d'un véhicule automobile; comportant une face d'impact destinée lors d'une collision du véhicule à recevoir le choc provenant d'une déformation d'un élément de la carrosserie du véhicule situé à proximité, caractérisé en ce que l'impacteur est lié au groupe motopropulseur par un premier moyen de maintien comprenant un vissage, et par un deuxième moyen de transmission d'effort comprenant sur une des pièces une forme en relief ajustée dans une forme en creux réalisée sur l'autre des pièces, pour renforcer la liaison de l'impacteur au groupe motopropulseur.

Un avantage essentiel de l'impacteur selon l'invention est que la fixation de l'impacteur peut comprendre un nombre réduit de vissage, permettant un montage rapide et économique, une part importante des forces étant transmise par le moyen de transmission d'effort qui peut se monter par simple emboîtement.

De plus, l'impacteur selon l'invention peut comporter une ou plusieurs des caractéristiques suivantes, qui peuvent être combinées entre elles.

Selon une caractéristique préférée de l'invention, la forme en relief est cylindrique, et s'ajuste dans un alésage réalisé sur l'autre des pièces.

Suivant une première variante, la forme cylindrique constituant le bossage est formé directement dans la matière de l'impacteur.

Selon une deuxième variante, la forme cylindrique est une goupille qui s'ajuste dans un perçage de l'impacteur.

La goupille peut être pleine, et être montée au préalable de manière serrée dans le perçage de l'impacteur.

Avantageusement, le bossage est situé sur une face de l'impacteur en appui sur une face transversale sensiblement verticale du groupe motopropulseur, qui est tournée vers l'avant du véhicule.

La face d'appui transversale du groupe motopropulseur, peut recevoir au moins une vis de fixation de l'impacteur sur le groupe motopropulseur.

L'impacteur peut être en appui de plus sur une autre face d'appui longitudinale sensiblement verticale du groupe motopropulseur, qui reçoit une seule vis de fixation.

Dans ce cas, la face d'appui transversale du groupe motopropulseur, peut recevoir une seule vis de fixation de l'impacteur sur le groupe motopropulseur.

Avantageusement, la face d'impact est sensiblement parallèle à la face d'appui transversale du groupe motopropulseur.

De préférence, l'impacteur est fixé sur un des carters du groupe motopropulseur.

L'invention sera mieux comprise et d'autres caractéristiques et avantages apparaîtront plus clairement à la lecture de la description ci-après donnée à titre d'exemple en référence aux dessins annexés dans lesquels:
- la figure 1 est une vue en coupe d'un impacteur selon l'invention fixé sur un carter de boîte de vitesses, suivant un premier mode de réalisation;
- la figure 2 est une vue en perspective de l'impacteur présenté en figure 1;
- la figure 3 est une vue en perspective représentant un impacteur selon l'invention suivant un deuxième mode de réalisation, et une traverse avant du véhicule:
- la figure 4 est une vue en perspective de l'impacteur et de la traverse avant suivant un autre angle de vue ; et
- la figure 5 est une vue en perspective de l'impacteur suivant un autre angle de vue.

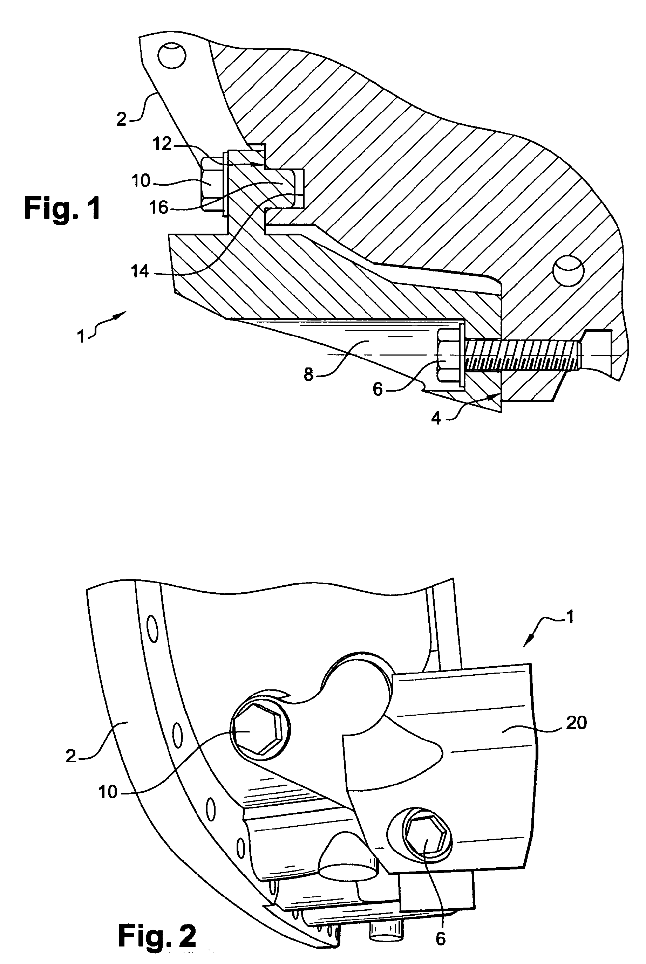

Les figures 1 et 2 représentent un impacteur 1 fixé en appui sur des faces d'appui transversales et parallèles 4, 12 d'un carter de boîte de vitesses 2, ces faces étant sensiblement verlicales et tournées vers l'avant du véhicule. Une première vis 6 de fixation dont la tête est logée au fond d'un lamage 8, traverse l'impacteur 1 et le serre en utilisant un trou taraudé du carter 2, sur une première face d'appui 4 du carter 2. Une deuxième vis 10 de fixation distante de la première, serre l'impacteur de la même manière sur une deuxième face d'appui 12 du carter 2.

Un alésage borgne 14 est usiné sur la face d'appui 12 du carter 2, suivant un axe parallèle à ceux des vis 6, 10. Cet alésage reçoit un bossage cylindrique 16 réalisé directement dans la matière de l'impacteur 2, qui dépasse de la face en appui sur la face correspondante 12 du carter 2. Le bossage cylindrique 16 est ajusté sans jeu dans l'alésage 14 du carter 2, de manière à être calé dans son logement.

L'impacteur 1 comporte par ailleurs une face d'impact 20 comportant un léger creux suivant une génératrice sensiblement transversal, cette face d'impact étant globalement parallèle aux faces d'appui transversales 4, 12 du carter 2. Cette face d'impact 20 se trouve à proximité d'une face correspondante de la traverse avant non représentée de la carrosserie du véhicule, qui lui est aussi sensiblement parallèle.

Le fonctionnement de l'impacteur 1 est le suivant. Lors d'une collision sur la partie avant du véhicule, la traverse avant peut se déformer et reculer en venant buter sur la face d'impact 20 de l'impacteur 2. Si l'énergie délivrée par le choc est importante, elle est absorbée par une forte déformation du véhicule, le groupe motopropulseur en recevant une partie recule vers l'habitacle se trouvant derrière lui.

La face d'impact 20 a pour fonction de recevoir le choc venant de la traverse avant, et de permettre à cette traverse de pousser régulièrement sur le groupe motopropulseur pendant la durée de l'impact, les deux faces de contact parallèles permettant cet appui et empêchant notamment la traverse de passer en dessous du groupe motopropulseur. De cette manière, en association avec une conception spécifique des fixations du groupe motopropulseur, ce groupe est guidé suivant une cinématique prédéfinie pour se glisser sous l'habitacle en évitant de le déformer fortement.

La surface légèrement creuse de la face d'impact 20 permet un meilleur accrochage des deux faces en contact lors du choc, et évite un glissement de ces faces l'une sur l'autre.

Le bossage cylindrique 16 de l'impacteur 1 a une résistance notamment en cisaillement plus élevée que celle d'une vis, et permet d'assurer une grande résistance à la liaison entre l'impacteur et le carter 2 de la transmission. Il intervient en complément des vis de fixation 6, 10 pour fournir une part importante de la résistance de cette liaison. Le bossage cylindrique 16 permet une mise en oeuvre simple et rapide, étant mis en place par simple emboîtement. II permet de réduire le nombre de vis de liaison et donc le coût et le temps de montage de l'impacteur 1 sur le carter 2.

Par ailleurs l'usinage sur le carter 2 de l'alésage 14 recevant le bossage cylindrique 16, suivant un axe parallèle aux vis de fixation 6, 10, est une opération simple. De plus, cet alésage 14 comporte une longueur réduite par rapport à celle nécessaire pour un perçage taraudé recevant une vis, la forme de fonderie du carter le contenant est plus petite, on a un gain en encombrement est en poids.

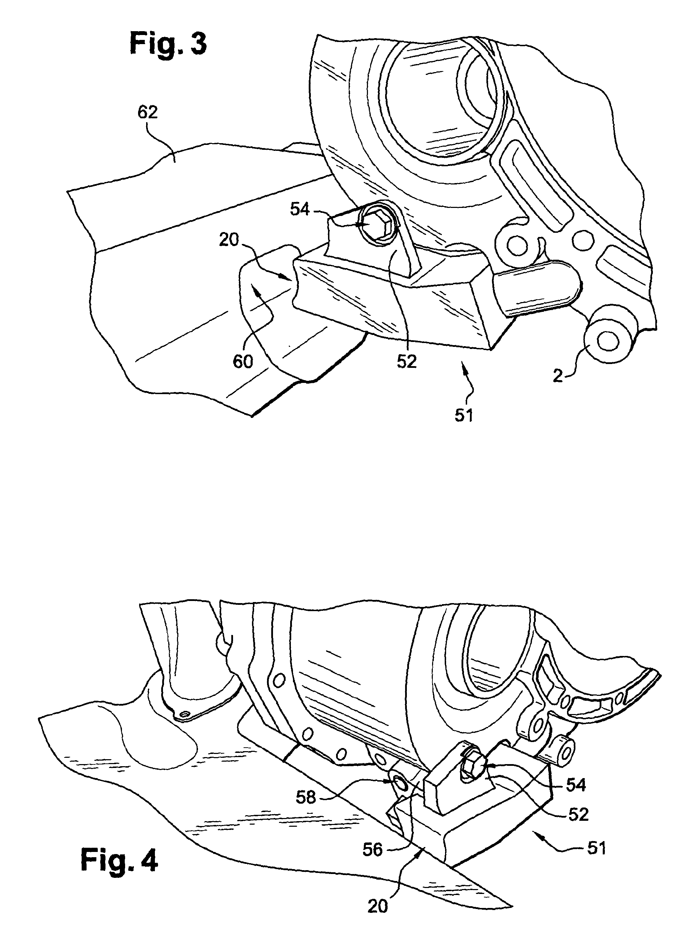

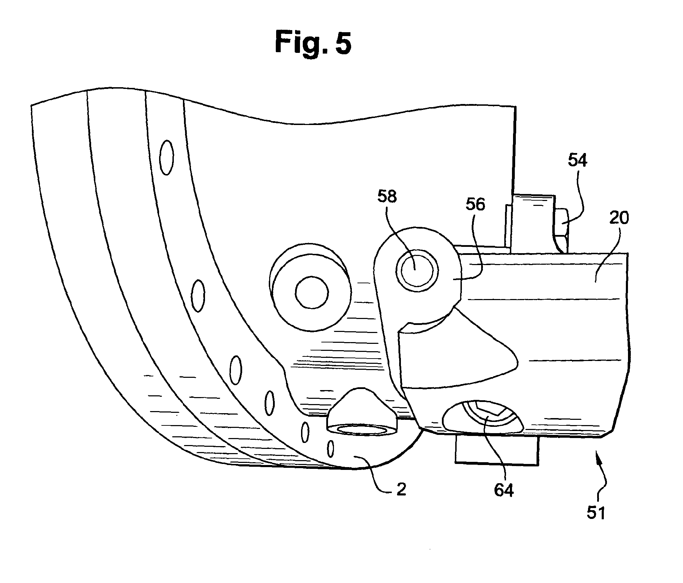

Les figures 3 à 5 présentent une variante 51 de l'impacteur, comportant une aile longitudinale 52 sensiblement verticale, placée sur le côté du carter 2 de la boîte de vitesses et recevant une première vis de fixation 54. Une deuxième aile transversale 56 sensiblement verticale aussi, est placée en avant de la boîte de vitesses. Cette aile transversale 56 comporte des perçages recevant une deuxième vis de fixation 64 et une goupille pleine de liaison 58, pour la fixation sur une face d'appui du carter 2.

Au montage, la goupille de liaison 58 est d'abord montée serrée dans l'impacteur 51, puis l'ensemble est positionné sur carter 2, cette goupille venant s'ajuster dans un alésage borgne de ce carter.

On réalisme ainsi un bossage cylindrique solidaire de l'impacteur 51, qui en combinaison avec les deux ailes perpendiculaires en appui sur des faces correspondantes du groupe motopropulseur, liées chacune par une seule vis de fixation, renforce de manière importante la liaison entre l'impacteur et le carter 2 le supportant, suivant les différentes directions de l'espace. De plus ce bossage ne nécessite seulement qu'un perçage sur l'impacteur, et peut être réalisé de manière économique.

On notera sur les figures 3 et 4 la position de la traverse avant 62 du véhicule, comportant une face d'impact 60 réalisée par un emboutissage en creux sur un côté de cette traverse, cette face d'impact étant en regard de celle de l'impacteur 51.

D'une manière général, l'impacteur suivant l'invention peut être fixé sur différentes parties du groupe motopropulseur, le moteur, la transmission, ou d'autres organes fixés dessus. Le bossage qui s'ajuste dans la forme en creux pour renforcer la liaison, peut être réalisé sur l'une ou l'autre des pièces à lier, et peut comporter différentes formes.

## Revendications

1. Impacteur de choc (1, 51) fixé au groupe motopropulseur d'un véhicule automobile, comportant une face d'impact (20) destinée lors d'une collision du véhicule à recevoir le choc provenant d'une déformation d'un élément (62) de la carrosserie du véhicule situé à proximité, **caractérisé en ce que** l'impacteur est liable au groupe motopropulseur par un premier moyen de maintien (6, 10, 54, 64) comprenant un vissage, et par un deuxième moyen de transmission d'effort comprenant sur une des pièces une forme en relief (16, 58) ajustée dans une forme en creux (14) réalisée sur l'autre des pièces, pour renforcer la liaison de l'impacteur au groupe motopropulseur.

2. Impacteur de choc selon la revendication 1, **caractérisé en ce que** la forme en relief (16, 58) est cylindrique, et s'ajuste dans un alésage réalisé sur l'autre des pièces.

3. Impacteur de choc selon la revendication 2, **caractérisé en ce que** la forme cylindrique (16) constituant le bossage est formé directement dans la matière de l'impacteur (1).

4. Impacteur de choc selon la revendication 2, **caractérisé en ce que** la forme cylindrique est une goupille (54) qui s'ajuste dans un perçage de l'impacteur (51).

5. Impacteur de choc selon la revendication 4, **caractérisé en ce que** la goupille (54) est pleine, et **en ce qu'**elle est montée au préalable de manière serrée dans le perçage de l'impacteur (51).

6. Impacteur de choc selon l'une quelconque des revendications précédentes, **caractérisé en ce que** le bossage (16, 58) est situé sur une face de l'impacteur (1, 51) en appui sur une face transversal (12) sensiblement verticale du groupe motopropulseur, qui est tournée vers l'avant du véhicule.

7. Impacteur de choc selon la revendication 6, **caractérisé en ce que** la face d'appui transversale (12) du groupe motopropulseur, reçoit au moins une vis de fixation (10. 64) de l'impacteur (1, 51) sur le groupe motopropulseur.

8. Impacteur de choc selon l'une des revendications 6 ou 7, **caractérisé en ce qu'**il est en appui de plus sur une autre face d'appui longitudinale sensiblement verticale du groupe motopropulseur, qui reçoit une seule vis de fixation (54).

9. Impacteur de choc selon la revendication 8, **caractérisé en ce que** face d'appui transversale (12) du groupe motopropulseur, reçoit une seule vis de fixation (64) de l'impacteur (51) sur le groupe motopropulseur.

10. Impacteur de choc selon l'une quelconque des revendications 6 à 9, **caractérisé en ce que** la face d'impact (20) est sensiblement parallèle à la face d'appui transversale (12) du groupe motopropulseur.

11. Impacteur de choc selon l'une quelconque des revendications précédentes, **caractérisé en ce qu'**il est fixé sur un des carters du groupe motopropulseur.

## Claims

1. Shock impactor (1, 51) fixed to the powertrain of a motor vehicle, comprising an impact face (20) which, in the event of a collision of the vehicle, is intended to receive the shock originating from a deformation of an element (62) of the body of the vehicle situated in the vicinity, **characterized in that** the impactor is able to be connected to the powertrain by a first retaining means (6, 10, 54, 64) comprising a screw fastening, and by a second force-transmission means comprising, on one of the parts, a projecting shape (16, 58) fitted into a recessed shape (14) formed on the other of the parts, in order to strengthen the connection of the impactor to the powertrain.

2. Shock impactor according to Claim 1, **characterized in that** the projecting shape (16, 58) is cylindrical and fits in a bore formed on the other of the parts.

3. Shock impactor according to Claim 2, **characterized in that** the cylindrical shape (16) constituting the boss is formed directly in the material of the impactor (1).

4. Shock impactor according to Claim 2, **characterized in that** the cylindrical shape is a pin (54) which fits in a bore of the impactor (51).

5. Shock impactor according to Claim 4, **characterized in that** the pin (54) is solid and **in that** it is mounted in advance tightly in the bore of the impactor (51).

6. Shock impactor according to any one of the preceding claims, **characterized in that** the boss (16, 58) is situated on a face of the impactor (1, 51) resting on a substantially vertical transverse face (12) of the powertrain, which is facing towards the front of the vehicle.

7. Shock impactor according to Claim 6, **characterized in that** the transverse support face (12) of the powertrain receives at least one fixing screw (10, 64) of the impactor (1, 51) on the powertrain.

8. Shock impactor according to one of Claims 6 or 7, **characterized in that** it rests in addition on another substantially vertical longitudinal support face of the powertrain, which receives a single fixing screw (54).

9. Shock impactor according to Claim 8, **characterized in that** the transverse support face (12) of the powertrain receives a single fixing screw (64) of the impactor (51) on the powertrain.

10. Shock impactor according to any one of Claims 6 to 9, **characterized in that** the impact face (20) is substantially parallel to the transverse support face (12) of the powertrain.

11. Shock impactor according to any one of the preceding claims, **characterized in that** it is fixed on one of the cases of the powertrain.

## Patentansprüche

1. Stoßkörper (1, 51), der an dem Antriebsaggregat eines Kraftfahrzeugs befestigt ist, der eine Aufprallseite (20) aufweist, die bei einem Zusammenstoßen des Fahrzeugs dazu bestimmt ist, den Stoß aufzunehmen, der von einer Verformung eines Elements (62) der Karosserie des Fahrzeugs, das sich in der Nähe befindet, stammt, **dadurch gekennzeichnet, dass** der Stoßkörper mit dem Antriebsaggregat durch ein erstes Haltemittel (6, 10, 54, 64), das ein Schraubmittel aufweist, verbunden werden kann, und durch ein zweites Kraftübertragungsmittel, das auf einem der Teile eine Reliefform (16, 58) aufweist, die in einer Hohlform (14) angepasst ist, die auf dem anderen der Teile hergestellt ist, um die Verbindung des Stoßkörpers mit dem Antriebsaggregat zu verstärken.

2. Stoßkörper nach Anspruch 1, **dadurch gekennzeichnet, dass** die Reliefform (16, 58) zylindrisch ist und in eine Bohrung passt, die auf dem anderen der Teile hergestellt ist.

3. Stoßkörper nach Anspruch 2, **dadurch gekennzeichnet, dass** die zylindrische Form (16), die den Höcker bildet, direkt in dem Material des Stoßkörpers (1) ausgebildet ist.

4. Stoßkörper nach Anspruch 2, **dadurch gekennzeichnet, dass** die zylindrische Form ein Stift (54) ist, der in eine Bohrung des Stoßkörpers (51) passt.

5. Stoßkörper nach Anspruch 4, **dadurch gekennzeichnet, dass** der Stift (54) massiv ist, und dass er vorab knapp passend in die Bohrung des Stoßfängers (51) montiert wird.

6. Stoßkörper nach einem der vorhergehenden Ansprüche, **dadurch gekennzeichnet, dass** der Höcker (16, 58) auf einer Seite des Stoßkörpers (1, 51) in Auflage auf einer Querfläche (12) liegt, die im Wesentlichen zu dem Antriebsaggregat senkrecht steht und die zu der Vorderseite des Fahrzeugs gerichtet ist.

7. Stoßkörper nach Anspruch 6, **dadurch gekennzeichnet, dass** die Querauflagefläche (12) des Antriebsaggregats mindestens eine Befestigungsschraube (10, 64) des Stoßkörpers (1, 51) auf dem Antriebsaggregat aufnimmt.

8. Stoßkörper nach einem der Ansprüche 6 oder 7, **dadurch gekennzeichnet, dass** er außerdem auf einer Längsauflagefläche, die zu dem Antriebsaggregat im Wesentlichen senkrecht steht, und die nur eine Befestigungsschraube (54) aufnimmt, aufliegt.

9. Stoßkörper nach Anspruch 8, **dadurch gekennzeichnet, dass** die Querauflagefläche (12) des Antriebsaggregats eine einzige Befestigungsschraube (64) des Stoßkörpers (51) auf dem Antriebsaggregat aufnimmt.

10. Stoßkörper nach einem der Ansprüche 6 bis 9, **dadurch gekennzeichnet, dass** die Aufprallfläche (20) im Wesentlichen zu der Querauflagefläche (12) des Antriebsaggregats parallel ist.

11. Stoßkörper nach einem der vorhergehenden Ansprüche, **dadurch gekennzeichnet, dass** er auf einem der Gehäuse des Antriebsaggregats befestigt ist.
